(19) Europäisches Patentamt
European Patent Office
Office européen des brevets

(11) Veröffentlichungsnummer: **0 121 206**
**B1**

# (12) EUROPÄISCHE PATENTSCHRIFT

(45) Veröffentlichungstag der Patentschrift: **27.09.89**

(51) Int. Cl.⁴: **C 08 G 75/02**

(21) Anmeldenummer: **84103299.8**

(22) Anmeldetag: **26.03.84**

## (54) Verfahren zur Herstellung von gegebenenfalls verzweigten Polyarylensulfiden.

(30) Priorität: **05.04.83 DE 3312254**

(43) Veröffentlichungstag der Anmeldung: **10.10.84 Patentblatt 84/41**

(45) Bekanntmachung des Hinweises auf die Patenterteilung: **27.09.89 Patentblatt 89/39**

(84) Benannte Vertragsstaaten: **DE FR GB IT**

(56) Entgegenhaltungen:
**EP-A- 0 065 689**
**EP-A- 0 075 769**
**FR-A- 2 312 523**
**US-A- 4 039 518**
**US-A- 4 096 132**

(73) Patentinhaber: **BAYER AG, D-5090 Leverkusen 1 Bayerwerk (DE)**

(72) Erfinder: **Idel, Karsten, Dr., Scheiblerstrasse 81, D-4150 Krefeld (DE)**
Erfinder: **Ostlinning, Edgar, Dr., Rembrandtstrasse 37, D-4000 Düsseldorf (DE)**
Erfinder: **Koch, Wolfgang, Dipl.-Chem., Bleichstrasse 14, D-6339 Bischoffen II (DE)**
Erfinder: **Heitz, Walter, Prof.Dr., Am Schmidtborn 5, D-3575 Kirchhain (DE)**

**EP 0 121 206 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein neues Verfahren zur Herstellung von gegebenenfalls verzweigten Polyarylensulfiden aus gegebenenfalls substituierten Halogenbenzolen im Gemisch mit Polyhalogenaromaten und Alkalisulfiden in polaren Lösungsmitteln, wobei Reduktionsmittel und weitere polyhalogenierte Verbindungen zugesetzt werden.

Polyarylensulfide sind bekannt (vgl. US-PS 2 538 941 und 2 513 188). Sie können aus den entsprechenden Halogenaromaten und Alkali- oder Erdalkalisulfiden hergestellt werden. So werden z.B. nach dem in US-PS 3 354 129 beschriebenen Verfahren monomere und polymere Sulfide durch Umsetzung mindestens einer cyclischen Verbindung, die eine Doppelbindung zwischen benachbarten Ringatomen enthält, und die wenigstens mit einem Halogenatom substituiert ist, mit einem Alkalisulfid in einem polaren Lösungsmittel hergestellt. Polyhalogenverbindungen können als Verzweiger eingesetzt werden.

Aus der DE-AS 2 453 749 ist die Verwendung von Carboxylaten als Reaktionsbeschleuniger sowie die zusätzliche Verwendung von Thioverbindungen als Schwefelspender bekannt. Aus der DE-OS 2 623 363 und der US-PS 4 038 261 ist für die Herstellung von Arylensulfidpolymeren die Verwendung von Lithiumchlorid oder Lithiumcarboxylaten als Katalysator bekannt.

Nach der US-PS 4 038 259 werden Alkalicarbonate in Kombination mit Alkalicarboxylaten und gemäß US-PS 4 038 263 Lithiumhalogenide als Katalysatoren für die Polyphenylensulfidherstellung eingesetzt. Nach der DE-OS 2 623 362 und US-PS 4 038 262 werden Lithiumhalogenide oder Alkalicarboxylate zusammen mit Kohlendioxid als Katalysator für die Herstellung von Arylensulfidpolymeren verwendet.

Weiterhin ist z.B. aus der US-PS 4 038 260 die Verwendung von Alkalimetallsulfonaten und aus der US-PS 4 039 518 die Verwendung von Lithiumcarbonat und Lithiumborat als Katalysator bekannt.

Gemäß US-PS 4 096 132 werden unverzweigte p-Polyphenylensulfide mit leicht erhöhter Schmelzviskosität erhalten, wenn in Gegenwart von Alkalicarboxylat, bevorzugt Lithiumacetat und Alkalihydroxiden umgesetzt wird.

Polyarylensulfide mit verringertem Schmelzfließverhalten können unter Verwendung von Trialkaliphosphat-Katalysatoren (DE-OS 2 930 710) oder Alkaliphosphonat-Katalysatoren (DE-PS 2 930 797) erhalten werden.

Aus der DE-OS 2 623 333 ist bekannt, zuerst das Hydratwasser des als Katalysator eingesetzten Lithiumacetats zu entfernen und in einem zweiten Schritt das Hydratwasser des Natriumsulfidhydrats.

Aus der US-PS 4 178 433 ist bekannt, disulfidfreie Polyarylensulfide unter Verwendung von $S_2Cl_2$ oder $S_2Br_2$ herzustellen.

Im allgemeinen werden die p-Polyphenylensulfide durch eine Kettenverlängerungs- und Verzweigungsreaktion einem Härtungs- oder Curingschritt unterzogen (z.B. US-PS 3 727 620, US-PS 3 524 835, US-PS 3 839 301). Ohne diesen Härtungsschritt besitzen die Polyphenylensulfide im allgemeinen eine niedrige Schmelzviskosität, die eine thermoplastische Verarbeitung kaum zuläßt.

Gemäß US-PS 3 919 177 soll mit Hilfe von Lithiumcarboxylaten als Katalysator erreicht werden, daß das erzeugte p-Polyphenylensulfid ohne vorherige Härtung zu Fasern schmelzversponnen werden kann. In der US-PS 4 116 947 bzw. DE-OS 2 817 731 wird beschrieben, daß durch eine bestimmte Menge Restwasser bewirkt wird, daß die Polyphenylensulfide ohne Härtungsschritt zu Fasern versponnen und extrudiert, sowie formgepreßt werden können.

Der Erfindung liegt die Erkenntnis zugrunde, daß Polyarylensulfide mit hoher Schmelzviskosität und hohem Molekulargewicht erhalten werden können, wenn man in an sich bekannter Weise Di- und Polyhalogenbenzole und Alkalisulfide in bestimmten polaren Lösungsmitteln kondensiert und gegen Ende der Umsetzung zusätzlich 1 bis 50 Mol-%, vorzugsweise 1 bis 25 Mol-% (bezogen auf 1 Mol Alkalisulfid) eines Reduktionsmittels und 1 bis 50 Mol-%, vorzugsweise 1 bis 25 Mol-% einer Polyhalogenverbindung zugibt.

Die erhaltenen Polyarylensulfide haben im Vergleich zu bekannten Polyarylensulfiden den Vorteil, daß sie bis zu einer Temperatur von 350 °C für Metalle keine korrodierende Eigenschaften haben. Außerdem haben sie im Vergleich zu marktgängigen Polyarylensulfiden bessere mechanische Eigenschaften.

Gegenstand der Erfindung ist ein Verfahren zur Herstellung von gegebenenfalls verzweigten, hochmolekularen Polyarylensulfiden mit hoher Schmelzviskosität, wobei

a) Dihalogenbenzole, von denen 0 bis 100 Mol-%, vorzugsweise 50 bis 100 Mol-% der Formel (I)

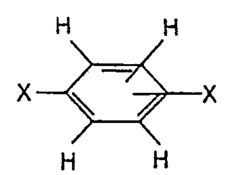

(I),

entsprechen und 0 bis 100 Mol-%, vorzugsweise 0 bis 50 Mol-% der Formel (II)

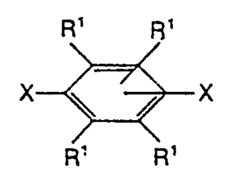

(II),

in denen

X für zueinander meta- oder para-ständiges Chlor oder Brom steht und

$R^1$ gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, wo-

bei zwei zueinander orthoständige Reste $R^1$ zu einem aromatischen oder heterocyclischen 6-gliedrigen Ring, der bis zu drei Heteroatome wie O, N, S enthalten kann, verknüpft sein können, und immer ein Rest $R^1$ verschieden von Wasserstoff ist und

b) 0 bis 3,0 Mol-%, bevorzugt 0,4 bis 2,0 Mol-%, bezogen auf die Summe der Dihalogenaromaten der Formel (I) und (II), eines Tri- oder Tetrahalogenaromaten der Formel (III)

$$ArX_n \qquad (III),$$

wobei

Ar ein aromatischer oder heterocyclischer Rest, bei dem bis zu drei Ring-C-Atome durch Heteroatome wie N, O, S ersetzt sein können, mit 6–24 C-Atomen ist,

X für Chlor oder Brom steht und

n 3 oder 4 ist,

c) Alkalisulfide, bevorzugt Natrium- oder Kaliumsulfid oder deren Mischung, bevorzugt in Form der Hydrate oder wäßrigen Mischungen, gegebenenfalls zusammen mit Alkalihydroxiden wie Natrium- und Kaliumhydroxid, wobei das molare Verhältnis von (a+b):c im Bereich von 0,85:1 bis 1,15:1, bevorzugt 0,95:1 bis 1,05:1, liegt

d) in einem polaren Lösungsmittel, gegebenenfalls in Anwesenheit von weiteren Cosolventien und gegebenenfalls in Gegenwart von Katalysatoren, und das molare Verhältnis von c) zu d) im Bereich von 1:2 bis 1:15 liegt, umgesetzt werden, dadurch gekennzeichnet, daß 1 bis 50 Mol-%, vorzugsweise 1 bis 25 Mol-% (bezogen auf Mol Alkalisulfid) eines Reduktionsmittels und 1 bis 50 Mol-%, vorzugsweise 1 bis 25 Mol-% einer Verbindung der Formel (IV)

$$XAr\text{–}Y\text{–}ArX \qquad (IV),$$

in welcher

Ar, X die bei Formel (III) angegebene Bedeutung haben und

Y für eine einfache Bindung, Sauerstoff, Schwefel,

$$-SO_2-,\ \underset{\underset{O}{\|}}{-C-}\ \text{und}\ -(CR^1R^2)-_m$$

steht, wobei

$R^1$ und $R^2$ für Wasserstoff oder einen Alkylrest mit 1 bis 6 C-Atomen stehen und

wobei die Summe von I, II und IV 100 Mol-% bezogen auf Mole Alkalisulfid ergeben soll, zugegeben werden.

Beispiele für erfindungsgemäß einzusetzende Dihalogenaromaten der Formel (I) sind: n-Dichlorbenzol, p-Dichlorbenzol, p-Dibrombenzol, m-Dibrombenzol und 1-Chlor-4-brombenzol. Sie sind allein oder im Gemisch miteinander verwendbar.

Beispiele für erfindungsgemäß einzusetzende Dihalogenaromaten der Formel (II) sind: 2,5-Dichlortoluol, 2,5-Dichlorxylol, 1-Ethyl-2,5-dichlorbenzol, 1-Ethyl-2,5-dibrombenzol, 1-Ethyl-2-brom-5-chlorbenzol, 1,2,4,5-Tetramethyl-3,6-dichlorbenzol, 1-Cyclohexyl-2,5-dichlorbenzol, 1-Phenyl-2,5-dichlorbenzol, 1-Benzyl-2,5-dichlorbenzol, 1-Phenyl-2,5-dibrombenzol, 1-p-Tolyl-2,5-dichlorbenzol, 1-p-Tolyl-2,5-dibrombenzol, 1-Hexyl-2,5-dichlorbenzol. Sie sind allein oder im Gemisch miteinander einsetzbar.

Beispiele für erfindungsgemäß einzusetzende Tri- oder Tetrahalogenaromaten der Formel (III) sind: 1,2,3-Trichlorbenzol, 1,2,4-Trichlorbenzol, 1,2,4-Tribrombenzol, 1,3,5-Trichlor-1,4,6-trimethylbenzol, 1,2,3-Trichlornaphthalin, 1,2,4-Trichlornaphthalin, 1,2,6-Trichlornaphthalin, 2,3,4-Trichlortoluol, 2,4,6-Trichlortoluol, 1,2,3,4-Tetrachlornaphthalin, 1,2,4,5-Tetrachlorbenzol, 2,2'-4,4'-Tetrachlorbiphenyl, 1,3,5-Trichlor-triazin.

Beispiele für die erfindungsgemäß einzusetzenden polyhalogenierten Verbindungen der Formeln (IV) sind: Bis-(4-chlorphenyl)-ether, Bis-(4-chlorphenyl)-sulfid, Bis-(4-bromphenyl)-sulfid, Bis-(4-chlorphenyl)-sulfon, Bis-(4-bromphenyl)-sulfon, Bis-(4-chlorphenyl)-keton, Bis-(4-chlorphenyl)-methan, 2,2-Bis-(p-chlorphenyl)-propan, 4,4'-Dichlorbenzolbiphenyl, 4,4'-Dibrombiphenyl, 2,6-Dichlorpyridin, 2,5-Dichlorthiophen.

Bei der Zugabe der Polyhalogenverbindungen werden gegebenenfalls 1 bis 50 Mol-%, bevorzugt 1 bis 25 Mol-% weiterer Basen, z. B. Alkalihydroxide wie NaOH oder KOH oder 0,5 bis 25 Mol-%, bevorzugt 0,5 bis 12,5 Mol-% Carbonate wie $Na_2CO_3$, bezogen auf eingesetztes Alkalisulfid, zugesetzt.

Die Alkalisulfide, bevorzugt Kalium- und Natriumsulfid, werden vorzugsweise in Form ihrer Hydrate oder wäßrigen Lösungen eingesetzt. Sie können auch aus Schwefelwasserstoff und den entsprechenden Alkalihydroxiden oder aus Alkalihydrogensulfiden und entsprechenden Alkalihydroxiden gemäß einer stöchiometrischen Umsetzung in der Reaktionslösung direkt hergestellt werden. Es können Mischungen der Alkalisulfide eingesetzt werden.

Je nach Anteil von Alkalihydrogensulfid in der Reaktionslösung, das als Verunreinigung im Alkalisulfid enthalten sein kann oder während der Umsetzung entstehen kann, wird zusätzlich stöchiometrisch Alkalihydroxid wie Lithium-, Natrium- oder Kaliumhydroxid zur Regenerierung von Alkalisulfid zudosiert. Gegebenenfalls können anstelle der Alkalihydroxide Verbindungen zugegeben werden, die unter den Reaktionsbedingungen Alkalihydroxide abspalten bzw. bilden.

Beispiele für erfindungsgemäß einzusetzende Reduktionsmittel sind: Komplexe Hydride wie Natriumborhydrid, Lithiumaluminiumhydrid, Dibutylaluminiumhydrid, Sulfite wie Natriumsulfit, Hypophosphite wie Natriumhypophosphit, unter den Reaktionsbedingungen reduzierend wirkende Zucker, sowie Wasserstoff und Hydrazinhydrat. Sie sind allein oder im Gemisch miteinander einsetzbar.

Generell kann jedes polare Lösungsmittel für die Reaktion verwendet werden, das eine ausreichende Löslichkeit der organischen und anorganischen Reaktanten unter den Reaktionsbedingungen gewährleistet. Bevorzugt werden Amide, Lactame und Harnstoffe und besonders bevorzugt N-alkylierte Amide, Lactame und cyclische Harnstoffe verwendet.

Lactame im Sinne der Erfindung sind solche von Aminosäuren mit 3 bis 5 C-Atomen, die gegebenenfalls Substituenten am Kohlenstoffgerüst tragen können, die unter Reaktionsbedingungen inert sind, z.B. Alkylreste mit 1 bis 5 C-Atomen.

N-Alkyllactame im Sinne der Erfindung sind wie die erfindungsgemäßen Lactame definiert, tragen jedoch zusätzlich am Stickstoffatom einen Alkylrest mit 1 bis 6 C-Atomen.

Harnstoffe im Sinne der Erfindung sind tetraalkylierte Harnstoffe der Formel (VI),

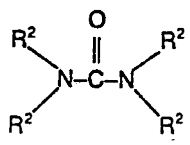

(VI),

in der

$R^2$ gleich oder verschieden sein kann und einen $C_1$- bis $C_4$-Alkylrest bedeutet, sowie cyclische Harnstoffe der Formel (VII),

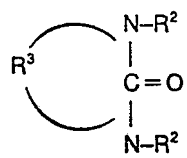

(VII),

in der

$R^2$ die oben genannte Bedeutung hat und bevorzugt für Methyl steht und

$R^3$ ein Ethylen- oder Propylenrest, der auch substituiert sein kann, ist.

Beispielsweise seien genannt:

N,N-Dimethylformamid, N,N-Diethylacetamid, N,N-Di-propylacetamid, N,N-Dimethylbenzoesäureamid, Caprolactam, N-Methylcaprolactam, N-Ethylcaprolactam, N-Isopropylcaprolactam, N-Isobutylcaprolactam, N-Propylcaprolactam, N-Butylcaprolactam, N-Cyclohexylcaprolactam, N-Methyl-2-pyrrolidon, N-Ethyl-2-pyrrolidon, N-Isopropyl-2-pyrrolidon, N-Isobutyl-2-pyrrolidon, N-Propyl-2-pyrrolidon, N-Butyl-2-pyrrolidon, N-Cyclohexyl-2-pyrrolidon, N-Methyl-3-methyl-2-pyrrolidon, N-Cyclohexyl-2-pyrrolidon, N-Methyl-3-methyl-2-pyrrolidon, N-Methyl-3,4,5-trimethyl-2-pyrrolidon, N-Methyl-2-piperidon, N-Ethyl-2-piperidon, N-Isopropyl-2-piperidon, N-Isobutyl-2-piperidon, N-Methyl-6-methyl-2-piperidon, N-Methyl-3-ethyl-2-piperidon, N-Methyl-2-oxo-hexamethylenimin, N-Ethyl-2-oxo-hexamethylenimin, Tetramethylharnstoff, 1,3-Dimethylethylenharnstoff, 1,3-Dimethyl-propylenharnstoff.

Es können Mischungen der vorstehenden Lösungsmittel gewählt werden.

Die Menge Lösungsmittel kann in einem weiten Bereich gewählt werden, liegt im allgemeinen bei 2 bis 15 Mol pro Mol Alkalisulfid.

Die Umsetzungstemperatur beträgt in der Regel 160 bis 300 °C, bevorzugt 200 bis 285 °C. Die Reaktionszeit kann bis zu 10 Stunden betragen, vorzugsweise 0,2 bis 8 Stunden. Eine stufenweise Steigerung der Reaktionstemperatur während dieser Zeit kann von Vorteil sein.

Das Dihalogenbenzol und das Alkalisulfid werden etwa äquimolar umgesetzt. Das Molverhältnis Dihalogenbenzol/Alkalisulfid liegt im Bereich von 0,85:1 bis 1,15:1 bevorzugt von 0,95:1 bis 1,05:1.

Die erfindungsgemäß einzusetzenden Polyhalogenaromaten der Formel (III) können bis zu einer Menge von mehreren Mol-%, bezogen auf den Anteil Dihalogenbenzol, je nach den Versuchsbedingungen zusammen mit den p-Dihalogenbenzolen oder getrennt zugesetzt werden. In der Regel wird ein Anteil von 0,2 bis 3,0 Mol, vorzugsweise 0,4 bis 2,0 Mol-%, bezogen auf den Anteil Dihalogenbenzol, ausreichend sein.

Bei Verwendung von Polyhalogenaromaten werden verzweigte Polyarylensulfide erhalten.

Das erfindungsgemäße Verfahren kann wie folgt durchgeführt werden:

Die Alkalisulfide werden im Lösungsmittel vorgelegt und können dann in einem oder mehreren Schritten, beispielsweise durch Abdestillieren des Wassers aus der Lösung, entwässert werden. Eine partielle Entwässerung vor der Zugabe der Dihalogenverbindungen ist im allgemeinen vorteilhaft.

Im Prinzip kann das Zusammengeben der Reaktanten in beliebiger Weise erfolgen. Die Dihalogenaromaten der Formeln (I), (II) und (IV) und Polyhalogenaromaten der Formel (III) können zusammen oder getrennt, kontinuierlich, in Portionen oder direkt auf einmal zum Alkalisulfid und dem Lösungsmittel oder einem Teil davon gegeben werden. Es können aber auch das Alkalisulfid zusammen mit dem Lösungsmittel oder einem Teil davon zu den Verbindungen der Formeln (I), (II) und (IV) und den Polyhalogenaromaten (III) gegeben werden. Es können auch alle Reaktanten direkt zusammengegeben werden. Beliebige andere Kombinationen der Zugabe der Reaktanten sind ebenfalls möglich.

Die Zugabe des Reduktionsmittels und der polyhalogenierten Verbindung der Formel (III) und/oder der dihalogenierten Verbindung (IV) kann ebenfalls gemeinsam oder getrennt, in beliebiger Reihenfolge, auf einmal, portionsweise oder kontinuierlich, gegebenenfalls gelöst in dem für die Umsetzung verwendeten Lösungsmittel, erfolgen.

Nach Zugabe des Reduktionsmittels und der Polyhalogenverbindung der Formel (III) und/oder der dihalogenierten Verbindung (IV) wird die Umsetzungstemperatur für einen weiteren Zeitraum aufrechterhalten. Vorteilhafterweise wird dieser Zeitraum doppelt bis neunmal so lang sein wie der Zeitraum bis zum Zeitpunkt der Zugabe des Reduktionsmittels und der Polyhalogenverbindung der Formel (III) und/oder der dihalogenierten Verbindung (IV) gewesen ist. Nach Beendigung der Umsetzung kann das Umsetzungsgemisch auf übliche Art zur Isolierung der Polyarylensulfide aufgearbeitet werden.

Das Polyarylensulfid kann direkt aus der Reaktionslösung oder erst nach Zugabe, z.B. von Wasser und/oder verdünnten Säuren, nach üblichen Verfahrensweisen durch Filtration oder durch

Zentrifugieren abgetrennt werden. Anschließend werden die abgetrennten Polyarylensulfide gewaschen, z. B. mit Wasser.

Eine Wäsche oder Extraktion mit anderen Waschflüssigkeiten, die auch zusätzlich oder nachträglich zu dieser Wäsche durchgeführt werden kann, ist auch möglich.

Weiterhin kann das Polymere durch Abziehen des Lösungsmittels aus dem Reaktionsraum und eine anschließende Wäsche, wie oben beschrieben, gewonnen werden.

Die erfindungsgemäßen Polyarylensulfide können mit anderen Polymeren, mit Pigmenten und Füllstoffen, beispielsweise Graphit, Metallpulver, Glaspulver, Quarzmehl oder Glasfasern gemischt oder mit den für Polyarylensulfide üblichen Additiven, beispielsweise üblichen Stabilisatoren oder Entformungsmitteln, versetzt werden.

Das Schmelzfließverhalten der Polyarylensulfide kann nach ASTM 1238-70 bei 316 °C unter Verwendung eines 5-kg-Gewichtes gemessen und in g/10 min angegeben werden.

Bei hohen Schmelzflußwerten kann diese Messung jedoch aufgrund der hohen Ausflußrate der Polymerschmelze Schwierigkeiten bereiten.

Es wurde deshalb die Schmelzviskosität $\eta$ m der Polymerschmelze (m Pa · s) bei 306 °C in Abhängigkeit von der Schubspannung $\tau$ (in Pa) mit Hilfe des Instron-Rotationsviskosimeters bestimmt. Man kann auf diese Weise die Schmelzviskosität in einem sehr weiten Bereich von $10^{-1}$ bis $10^7$ Pa · s bestimmen. Im Instron-Rheometer wird das Polymer zwischen einer festen Platte und einem drehbaren Kegel aufgeschmolzen und das Drehmoment des Kegels bestimmt. Aus Drehmoment, Winkelgeschwindigkeit und apparativen Daten kann die Schmelzviskosität in Abhängigkeit von der Schubspannung errechnet werden. Verwendet wurde ein Rheometer Modell 3250 der Fa. Instron; Durchmesser des Kegels und der Platte 2 cm.

Angegeben wird die Schmelzviskosität, die bei einer Schubspannung von $\tau = 10^2$ Pa gemessen wird.

Die erfindungsgemäßen Polyarylensulfide besitzen direkt nach der Isolierung aus dem Reaktionsgemisch im allgemeinen Schmelzviskositäten von $0{,}5 \times 10^3$ bis $5 \times 10^6$ Pa · s, vorzugsweise von $1{,}5 \times 10^3$ bis $10^4$ Pa · s. Sie können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Elektroteile wie Schalter, elektronische Tafeln, chemikalienresistente Teile und Apparate wie Pumpengehäuse und Pumpenflügelräder, Ätzbadschalen, Dichtungsringe, Teile von Büromaschinen und Fernmeldeeinrichtungen, sowie als Haushaltsgeräte, Ventile, Kugellagerteile, etc.

Beispiel 1
(Vergleichsbeispiel gemäß US-PS 3 354 129)

In einem mit Rührer ausgerüsteten Autoklaven wurden 129 g Natriumsulfid-tri-hydrat (entsprechend 1 Mol $Na_2S$) und 300 g N-Methyl-2-pyrrolidon zusammengegeben. Das Gemisch wurde mit Stickstoff gespült und langsam bis auf 202 °C erwärmt. Dabei destillierten insgesamt 19 ml Wasser ab. Der Ansatz wurde anschließend auf ca. 160 °C heruntergekühlt und 147 g p-Dichlorbenzol (= 1 Mol) in ca. 50 g N-Methyl-2-pyrrolidon hinzugefügt. Man erwärmt das Reaktionsgemisch unter dem Stickstoffvordruck von 2,5 bar in 30 Minuten auf 245 °C, wobei der Druck auf 10 bar ansteigt, und hält diese Temperatur 3 Stunden. Nach Abkühlen auf Raumtemperatur wird ein grauer Feststoff isoliert, der anschließend sorgfältig mit Wasser gewaschen wird.

Man trocknet bei 80 °C im Vakuum und erhält 100,3 g (93%) Poly-p-phenylensulfid mit folgenden Kenndaten:

Schmelzviskosität $\eta$ m = 4,5 Pa · s (bei $\tau = 10^2$ Pa). Eine thermoplastische Verarbeitung ist ohne Härtung nicht möglich.

Beispiel 2
(Vergleichsbeispiel gemäß US-PS 4 096 132)

In einem mit Rührer ausgerüsteten Autoklaven wurden 130,1 g Natriumsulfidhydrat (entsprechend 1 Mol $Na_2S$), 101,2 g Lithiumacetatdihydrat (0,99 Mol), 9,2 g NaOH (0,23 Mol) und 400 ml N-Methylpyrrolidon (2) vorgelegt. Das Gemisch wurde mit Stickstoff gespült und langsam bis auf 202 °C erwärmt. Das erhaltene Destillat bestand im wesentlichen aus $H_2O$. Zum verbleibenden Reaktionsgemisch wurden 150,3 g p-Dichlorbenzol (1,02 Mol) und ca. 70 ml N-Methylpyrrolidon (2) gegeben. Das Reaktionsgemisch wurde auf 266 °C aufgeheizt und 3 Stunden bei dieser Temperatur gehalten. Man erhielt nach der Aufarbeitung 87,5 g (81,2%) hellgraues Poly-p-phenylensulfid mit folgenden Kenndaten $\eta$ m = 15 Pa · s (bei $\tau = 10^2$ Pa). Eine thermoplastische Verarbeitung ist ohne Härtung nicht möglich.

Beispiel 3
Modellreaktion

In einem mit Rührer ausgerüsteten Glasautoklaven wurden 4,37 g Diphenyldisulfid (20 mmol), 5,74 g Bis-(4-chlorphenyl)-sulfon (20 mmol), 0,83 $NaBH_4$ (22 mmol), 2,12 g $Na_2CO_3$ (20 mmol) und 30 ml N-Methyl-2-pyrrolidon zusammengegeben. Das Gemisch wurde mit Stickstoff gespült und für 3 Stunden auf 240 °C erwärmt, wobei der Druck auf 3,3 bar anstieg.

Nach dem Abkühlen auf Raumtemperatur wurde das Reaktionsprodukt durch Eintropfen der Reaktionslösung in 200 ml Methanol ausgefällt und durch Umkristallisieren aus 130 ml Ethanol gereinigt. Die Ausbeute an gereinigtem Bis-(4-phenylthio)phenyl)-sulfon betrug 6,82 g (78,5% der Theorie). Der Schmelzpunkt der Substanz betrug 152 °C.

Beispiel 4
Modellreaktion

Wie Beispiel 3, jedoch mit 8,69 g Bis-[4-(phenylthio)phenyl]-disulfid (20 mmol). Die Ausbeute an Bis-(4-((4-(phenylthio)-phenyl)thio)phenyl)-sulfon

betrug 11,2 g (86,0% der Theorie). Der Schmelzpunkt der Substanz lag bei 181 °C (aus Ethanol/Chloroform = 4/1).

Beispiel 5

In einem Stahlautoklaven mit Rührer werden 191,6 g Natriumsulfid-Hydrat (1,455 Mol) zusammen mit 13,3 g 45%iger wäßriger Natronlauge (zur Neutralisation von im Natriumsulfid enthaltendem Natriumhydrogensulfid) in 450 g N-Methylpyrrolidon unter Stickstoff vorgelegt.

Durch langsames Aufheizen auf 175 °C werden 46 ml eines Destillats, das hauptsächlich aus Wasser besteht, erhalten.

Anschließend werden 187,4 g p-Dichlorbenzol (1,275 Mol) und 1,63 g (0,009 Mol) 1,2,4-Trichlorbenzol in 70 ml N-Methylpyrrolidon zugesetzt und die Reaktion 4 h bei 240 °C und ca. 15 bar gehalten. Anschließend werden 14,4 g einer 50%igen wäßrigen Hydrazinlösung (0,255 Mol) in Wasser in 50 ml N-Methylpyrrolidon und 64,6 g (0,225 Mol) 4,4'-Dichlordiphenylsulfon mit 100 ml N-Methylpyrrolidon zugepumpt und die Reaktion noch $^1/_2$ h weitergeführt. Nach Reaktionsende läßt man auf 150 °C abkühlen, entspannt und entnimmt das Reaktionsgemisch. Nach Ansäuren des Reaktionsgemisches auf pH 6,5 läßt sich das Polyarylensulfid-Sulfon durch Filtration isolieren. Man wäscht mit Wasser neutral, filtriert und trocknet das Polymer, das als grau-weißer Feststoff isoliert wird. Schmelzviskosität $\tau_m = 6{,}4 \times 10^3$ Pa · s (gemessen bei $10^2$ Pa).

Beispiel 6

Wie Beispiel 5, jedoch werden anstelle der 0,225 Mol Hydrazin-Hydrat 0,225 Mol Natriumborhydrid verwendet.

Es wird im Polyarylensulfid-Sulfon mit einer Schmelzviskosität von $5{,}8 \times 10^3$ Pa · s (gemessen bei $10^2$ Pa) isoliert.

Beispiel 7

Wie Beispiel 5, jedoch werden 198,4 g (1,35 Mol) p-Dichlorbenzol und 86,1 g (0,3 Mol) 4,4'-Dichlordiphenyl-sulfon sowie 18,9 g 50%iges wäßriges Hydrazin (0,3 Mol) gemäß Beispiel 5 verwendet.

Es wird ein Polyarylensulfid-Sulfon erhalten, das eine Schmelzviskosität von $5{,}4 \times 10^3$ Pa · s (gemessen bei $10^2$ Pa) besitzt.

**Patentansprüche**

1. Verfahren zur Herstellung von gegebenenfalls verzweigten, hochmolekularen Polyarylensulfiden mit hoher Schmelzviskosität, wobei

a) Dihalogenbenzole, von denen 0 bis 100 Mol-%, der Formel (I)

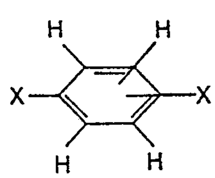 (I),

entsprechen und 0 bis 100 Mol-%, der Formel (II)

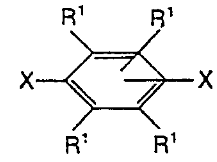 (II),

in denen

X für zueinander meta- oder para-ständiges Chlor oder Brom steht und

$R^1$ gleich oder verschieden ist und Wasserstoff, $C_1$–$C_{20}$-Alkyl, $C_5$–$C_{20}$-Cycloalkyl, $C_6$–$C_{24}$-Aryl, $C_7$–$C_{24}$-Alkaryl oder $C_7$–$C_{24}$-Aralkyl sein kann, wobei zwei zueinander orthoständige Reste $R^1$ zu einem aromatischen oder heterocyclischen 6-gliedrigen Ring, der bis zu drei Heteroatome wie O, N, S enthalten kann, verknüpft sein können, und immer ein Rest $R^1$ verschieden von Wasserstoff ist und

b) 0 bis 3,0 Mol-%, bezogen auf die Summe der Dihalogenaromaten der Formel (I) und (II), eines Tri- oder Tetrahalogenaromaten der Formel (III)

$$ArX_n \qquad (III),$$

wobei

Ar ein aromatischer oder heterocyclischer Rest, bei dem bis zu drei Ring-C-Atome durch Heteroatome wie N, O, S ersetzt sein können, mit 6–24 C-Atomen ist,

X für Chlor oder Brom steht und

n 3 oder 4 ist,

c) Alkalisulfide, gegebenenfalls zusammen mit Alkalihydroxiden, wobei das molekulare Verhältnis von (a+b):c im Bereich von 0,85:1 bis 1,15:1 liegt

d) in einem polaren Lösungsmittel, gegebenenfalls in Anwesenheit von weiteren Cosolventien und gegebenenfalls in Gegenwart von Katalysatoren, und das molare Verhältnis von c) und d) im Bereich von 1:2 bis 1:15 liegt, umgesetzt werden, dadurch gekennzeichnet, daß 1 bis 50 Mol-%, (bezogen auf Mol Alkalisulfid) eines Reduktionsmittels und 1 bis 50 Mol-%, einer Verbindung der Formel (IV)

$$XAr–Y–ArX \qquad (IV),$$

in welcher

Ar, X die bei Formel (III) angegebene Bedeutung haben und

Y für eine einfache Bindung, Sauerstoff, Schwefel

$$-SO_2-, \; -\underset{\underset{O}{\|}}{C}- \; \text{und} \; -(CR^1R^2)-_m$$

steht,

wobei $R^1$ und $R^2$ für Wasserstoff oder einen Alkylrest mit 1 bis 6 C-Atomen stehen,

wobei die Summe von I, II und IV 100 Mol-%, bezogen auf Mole Alkalisulfid, ergeben soll, zugegeben werden.

2. Verfahren gemäß Anspruch 1, dadurch gekennzeichnet, daß als Komponente a) p-Dichlorbenzol oder p-Dibrombenzol eingesetzt werden.

3. Verfahren gemäß Anspruch 1, dadurch gekennzeichnet, daß 0 bis 2,0 Mol-%, bezogen auf

Dihalogenbenzol, eines Polyhalogenaromaten der Formel III eingesetzt werden.

4. Verfahren gemäß Anspruch 1, dadurch gekennzeichnet, daß 1 bis 25 Mol-% (bezogen auf Mole Alkalisulfid) eines Reduktionsmittels und 1 bis 15 Mol-% einer reaktiven dihalogenierten Verbindung der Formel IV und gegebenenfalls 1 bis 25 Mol-% Basenäquivalente eingesetzt werden.

5. Verfahren gemäß Anspruch 1, dadurch gekennzeichnet, daß als Lösungsmittel ein am Stickstoff vollständig alkyliertes Amid und/oder Lactam und/oder ein am Stickstoff vollständig alkylierter cyclischer Harnstoff eingesetzt werden.

## Claims

1. A process for the production of optionally branched, high molecular weight polyarylene sulfides of high melt viscosity,

a) dihalobenzenes, of which from 0 to 100 mol-% correspond to formula (I)

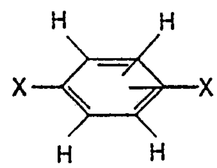 (I),

and 0 to 100 mol-% to formula (II)

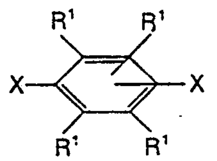 (II),

in which

the X's are chlorine or bromine atoms in the meta- or para-position to one another and

the $R^1$'s may be the same or different and represent hydrogen, $C_{1-20}$ alkyl, $C_{5-20}$ cycloalkyl, $C_{6-24}$ aryl, $C_{7-24}$ alkaryl or $C_{7-24}$ aralkyl; two substituents $R^1$ in the ortho position to one another may be attached to form an aromatic or heterocyclic 6-membered ring which may contain up to 3 heteroatoms, such as O, N, S, and one substituent $R^1$ is always different from hydrogen, and

b) from 0 to 3.0 mol-%, based on the sum of the aromatic dihalogen compounds corresponding to formulae (I) and (II), of an aromatic trihalogen or tetrahalogen compound corresponding to formula (III)

$$ArX_n \qquad (III)$$

in which

Ar is an aromatic or heterocyclic radical containing from 6 to 24 C atoms, in which up to three ring C atoms may be replaced by heteroatoms, such as N, O, S,

X is chlorine or bromine and

n is 3 or 4,

c) alkali sulfides, optionally together with alkali hydroxides, the molar ratio of (a+b):c being from 0.85:1 to 1.15:1, being reacted with one another

d) in a polar solvent, optionally in the presence of other co-solvents and optionally in the presence of catalysts, the molar ratio of c) to d) being from 1:2 to 1:15, characterized in that from 1 to 50 mol-% (per mol alkali sulfide) of a reducing agent and from 1 to 50 mol-% of a compound corresponding to formula (IV)

$$XAr{-}Y{-}ArX \qquad (IV)$$

in which

Ar and X are as defined for formula (III) and

Y is a single bond, oxygen, sulfur,

$-SO_2-$, 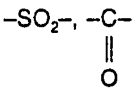 and $-(CR^1R^2)-_m$

where $R^1$ and $R^2$ are hydrogen or a $C_{1-6}$ alkyl radical,

are added, the sum of I, II and IV having to be 100 mol-%, based on mols alkali sulfide.

2. A process as claimed in claim 1, characterized in that p-dichlorobenzene or p-dibromobenzene is used as component a).

3. A process as claimed in claim 1, characterized in that from 0 to 2.0 mol-%, based on dihalobenzene, of an aromatic polyhalogen compound corresponding to formula III is used.

4. A process as claimed in claim 1, characterized in that from 1 to 25 mol-% (based on mols alkali sulfide) of a reducing agent and 1 to 15 mol-% of a reactive halogenated compound corresponding to formula (IV) and, optionally, from 1 to 25 mol-% base equivalents are used.

5. A process as claimed in claim 1, characterized in that an amide and/or lactam completely alkylated at the nitrogen and/or a cyclic urea completely alkylated at the nitrogen is/are used as the solvent.

## Revendications

1. Procédé pour préparer des poly(sulfures d'arylènes) à poids moléculaire élevé, éventuellement réticulés, ayant une viscosité élevée en masse fondue, selon lequel on fait réagir

a) des dihalogénobenzènes, dont 0 à 100 mol% répondent à la formule (I)

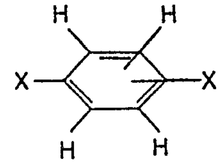 (I),

et 0 à 100 mol% répondent à la formule (II)

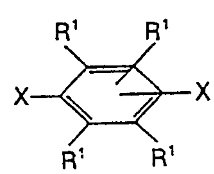 (II),

où les

X représentent chacun un atome de chlore ou de brome, situé en méta ou en para l'un par rapport à l'autre, et les symboles

$R^1$ peuvent avoir des sens identiques ou différents et représenter chacun un atome d'hydrogène, un groupe alkyle en $C_1$ à $C_{20}$, cycloalkyle en $C_5$ à $C_{20}$, aryle en $C_6$ à $C_{24}$, alcaryle en $C_7$ à $C_{24}$ ou aralkyle en $C_7$ à $C_{24}$, deux restes $R^1$ situés en ortho l'un par rapport à l'autre pouvant être reliés en formant un noyau hexagonal aromatique ou hétérocyclique pouvant contenir jusqu'à trois hétéro atomes comme O, N, S, et un reste $R^1$ ayant toujours un sens différent de celui d'un atome d'hydrogène, et

b) 0 à 3,0 mol%, sur la base de la somme des hydrocarbures dihalogéno-aromatiques de formule (I) et (II), d'un hydrocarbure trihalogéno-aromatique ou tétrahalogéno-aromatique de formule (III)

$$ArX_n \qquad \text{(III)}$$

dans laquelle

Ar représente un reste aromatique ou hétérocyclique, dans lequel jusqu'à 3 atomes de carbone cyclique peuvent être remplacés par des hétéro atomes comme N, O, S, ce reste comportant 6 à 24 atomes de carbone,

X représente du chlore ou du brome, et

n vaut 3 ou 4,

c) des sulfures alcalins, éventuellement avec des hydroxydes alcalins, le rapport moléculaire de (a+b):c ce situant entre 0,85:1 et 1,15:1,

d) dans un solvant polaire, éventuellement en présence d'autres cosolvants et éventuellement en présence de catalyseurs, et le rapport molaire de c) à d) se situant entre 1:2 et 1:15, procédé caractérisé en ce qu'on ajoute 1 à 50 mol% (par rapport à 1 mol de sulfure alcalin) d'un réducteur et 1 à 50 mol% d'un composé de formule (IV)

$$XAr{-}Y{-}ArX \qquad \text{(IV)}$$

dans laquelle

Ar, X ont le sens indiqué pour la formule (III), et

Y représente une liaison simple, un atome d'oxygène ou de soufre, un groupe

$$-SO_2-,\ -\underset{\underset{O}{\|}}{C}-\ \text{et}\ -(CR^1R^2)-_m,$$

où $R^1$ et $R^2$ représentent chacun un atome d'hydrogène ou un reste alkyle ayant 1 à 6 atomes de carbone,

la somme de I, II et IV devant donner 100 mol%, sur la base des mol de sulfure alcalin.

2. Procédé selon la revendication 1, caractérisé en ce qu'on utilise comme composant a) du p-dichlorobenzène ou de p-dibromobenzène.

3. Procédé selon la revendication 1, caractérisé en ce qu'on utilise de 0 à 2,0 mol%, sur la base du dihalogénobenzène, d'un hydrocarbure polyhalogéno-aromatique de formule III.

4. Procédé selon la revendication 1, caractérisé en ce qu'on utilise 1 à 25 mol% (par rapport à une mol de sulfure alcalin) d'un réducteur et 1 à 15 mol% d'un composé réactif dihalogéné, de formule IV, et éventuellement 1 à 25 mol% d'équivalents de base.

5. Procédé selon la revendication 1, caractérisé en ce qu'on utilise comme solvant un amide et/ou lactame entièrement alkylé sur l'azote et/ou une urée cyclique entièrement alkylée sur l'azote.